# EUROPÄISCHE PATENTSCHRIFT

(11) **EP 3 061 169 B1**
(45) Veröffentlichungstag und Bekanntmachung des Hinweises auf die Patenterteilung: **04.04.2018**
(21) Anmeldenummer: 14786874.9
(22) Anmeldetag: 20.10.2014
(51) Int. Cl.: H02G 3/22

(54) **BAUGRUPPE AUS EINER MONTAGEHALTERUNG UND EINER LEITUNGSDURCHFÜHRUNG**
ASSEMBLY HAVING A MOUNTING HOLDER AND A LINE BUSHING
ENSEMBLE POURVU D'UN SUPPORT DE MONTAGE ET D'UN PASSAGE DE CÂBLE

(30) Priorität: 21.10.2013 EP 13189540
(43) Veröffentlichungstag der Anmeldung: 31.08.2016
(73) Patentinhaber: Hilti Aktiengesellschaft, 9494 Schaan (LI)
(72) Erfinder: FÖRG, Christian, 86862 Dillishausen (DE)
(86) Internationale Anmeldenummer: PCT/EP2014/072401
(87) Internationale Veröffentlichungsnummer: WO 2015/059075

(56) Entgegenhaltungen:
- EP-A1- 2 003 757
- EP-A2- 1 108 936
- AT-B- 387 835
- DE-A1- 2 411 538
- DE-A1-102004 058 697
- DE-U1-202011 004 235

## Beschreibung

Die Erfindung betrifft eine Baugruppe aus einer Montagehalterung und einer Leitungsdurchführung.

Leitungsdurchführungen werden zum Durchführen von Kabeln oder Rohrleitungen durch Bauteile wie Decken oder Wände eingesetzt. Ein wesentlicher Aspekt ist dabei der Brandschutz, der z.B. durch in der Leitungsdurchführung enthaltenes intumeszierendes Material gewährleistet wird. Derartige Leitungsdurchführungen sind oft komplex aufgebaut und werden entweder in nachträglich geschaffene Öffnungen im Bauteil eingesetzt oder direkt bei der Fertigung des Bauteils in dieses eingegossen. Eine derartige Leitungsdurchführung ist beispielsweise in beschrieben in der DE-OS 2411538, der DE 102006035475 A1, der EP 1108936 A2, der AT 387835 B und der EP 2003757 A1 beschrieben.

Aufgabe der Erfindung ist es, eine Möglichkeit zu schaffen, mit der eine Leitungsdurchführung auf einfache Weise in ein Bauteil eingegossen werden kann, ohne dass die Leitungsdurchführung selbst speziell für das Eingießen ausgelegt sein muss.

Erfindungsgemäß ist hierzu eine Baugruppe aus einer Montagehalterung und einer Leitungsdurchführung vorgesehen gemäß Anspruch1. Die Montagehalterung umfasst eine umfangsmäßig geschlossene Umfangswand, von deren ersten axialen Ende ein Flanschabschnitt zur Befestigung an einer Schalung nach außen absteht. Der Flanschabschnitt definiert eine Ebene, die senkrecht zur Mittelachse der Umfangswand ausgerichtet ist.

Nach außen abstehend bedeutet bei einem runden oder ovalen Querschnitt der Leitungsdurchführung, dass der Flanschabschnitt radial nach außen absteht. Bei einem rechteckigen Querschnitt erstreckt sich der Flanschbereich ausgehend von der Mittelachse der Umfangswand nach außen, d.h. ausgehend von der Mittelachse der Umfangswand von dieser weg. Vom zweiten, entgegengesetzten axialen Ende der Umfangswand geht eine sich axial durch die Montagehalterung hindurch erstreckende Einstecköffnung für eine Leitungsdurchführung aus. In die Einstecköffnung ragt eine erste Befestigungsstruktur zum Angriff an einem Außenumfang der Leitungsdurchführung hinein. Die erfindungsgemäße Montagehalterung erlaubt es, auch eine Leitungsdurchführung ohne bauliche Änderungen in ein Bauteil einzugießen, die nicht explizit darauf ausgelegt ist, indem die Leitungsdurchführung in die Montagehalterung eingesetzt wird. Über die Montagehalterung lässt sich die Leitungsdurchführung auf einfache Weise beispielsweise an einer Schalung befestigen, die zum Gießen des Bauteils verwendet wird.

Die Form der Einstecköffnung ist dabei nicht beschränkt. Im Allgemeinen ist sie an eine rohrförmige, d.h. runde Leitungsdurchführung, angepasst. Alternativ kann die Einstecköffnung auch an Leitungsdurchführungen mit andersartigen Querschnittsformen angepasst sein, etwa rechtwinklig, insbesondere quadratisch, für ein Vierkantrohr.

Der Flanschabschnitt kann Öffnungen aufweisen, über die die Montagehalterung an der Schalung befestigbar ist. Somit ist kein Kontakt zwischen der Schalung und der Leitungsdurchführung erforderlich. Die Öffnungen sind vorzugsweise in der Nähe des Randes des Flanschabschnitts vorgesehen, beispielsweise in den Ecken eines viereckigen Flanschabschnitts, sodass der Flanschabschnitt einfach auf eine Schalung genagelt werden kann.

Am zweiten axialen Ende der Umfangswand ist bevorzugt ein sich nach innen erstreckender, d.h. sich in Richtung der Mittelachse der Umfangswand bzw. der Leitungsdurchführung erstreckender, Deckelabschnitt angeordnet, in dem die Einstecköffnung vorgesehen ist.

Die gesamte Montagehalterung kann einfach als Gussteil, Tiefzieh- bzw. Prägeteil gefertigt werden.

Bei der erfindungsgemäßen Baugruppe aus einer Montagehalterung, wie sie oben beschrieben wurde, und einer Leitungsdurchführung ist am Außenumfang der Leitungsdurchführung eine zweite Befestigungsstruktur vorgesehen, die in die erste Befestigungsstruktur eingreifen kann. Die erste und die zweite Befestigungsstruktur sind so ausgebildet, dass sie eine axiale Verstellung der Leitungsdurchführung relativ zur Montagehalterung zulassen, aber eine im Wesentlichen für eine Gussmasse, insbesondere Beton, dichte Verbindung bilden. Die axiale Verstellmöglichkeit über die Befestigungsstrukturen erlaubt es, auf einfache Weise die über die Montagehalterung hinausstehende Länge der Leitungsdurchführung an die jeweiligen Gegebenheiten, beispielsweise die Dicke des Bauteils, anzupassen.

Der Eingriff der ersten Befestigungsstrukturen ist vorzugsweise der einzige Kontakt zwischen der Montagehalterung und der Leitungsdurchführung.

Die erste und die zweite Befestigungsstruktur sind durch ein Gewinde gebildet. Die Leitungsdurchführung wird bis zur gewünschten Länge in die Montagehalterung eingeschraubt, was eine stufenlose Längenanpassung und gleichzeitig eine sichere Verbindung gewährleistet, die ein ungewolltes axiales Verschieben verhindert.

Erfindungsgemäß ist die erste Befestigungsstruktur nur durch einen einzigen Gewindegang gebildet. Dieser lässt sich einfach in den Rand der Einstecköffnung einprägen oder darin ausformen, was in einem Arbeitsgang bei der Herstellung der Montagehalterung beispielsweise beim Prägen, Tiefziehen oder Spritzgießen erfolgen kann.

Die Befestigungsstrukturen sind vorzugsweise für die Gussmasse so dicht, dass keine weitere Abdichtung vorgenommen werden muss, was die Verarbeitung beschleunigt.

Zwischen der Montagehalterung und der Leitungsdurchführung lässt sich jedoch auch eine Dichtung vorsehen, beispielsweise eine Filmdichtung, die in einem Zweikomponentenspritzgussverfahren an die Montagehalterung angeformt werden kann.

Die zweite Befestigungsstruktur erstreckt sich vorteilhaft im Wesentlichen über die gesamte Länge der Leitungsdurchführung, sodass eine große Verstelllänge erzielt werden kann.

Es kann zusätzlich ein Deckel zum Abdichten des axialen Endes der Leitungsdurchführung vorgesehen sein, das nicht in der Montagehalterung aufgenommen ist, um ein Eindringen von Beton zu verhindern.

In einer möglichen Variante sind beide axialen Enden der Leitungsdurchführung in jeweils einer eigenen Montagehalterung aufgenommen. Eine der Montagehalterungen wird z.B. zur Befestigung an der Schalung verwendet, während die zweite Montagehalterung beispielsweise bei dickeren Bauteilen als Verlängerung für die Leitungsdurchführung dient.

Auch hier kann ein Deckel vorgesehen sein, der eine der Montagehalterungen, bevorzugt die, die nicht an der Schalung befestigt ist, betondicht verschließen kann.

Vorzugsweise ist eine Innenseite der Umfangswand der Montagevorrichtung von der Außenwand der Leitungsdurchführung ausgehend von der Mittelachse der Leitungsdurchführung beabstandet. Auf diese Weise ist der Außenumfang der Leitungsdurchführung nach dem Eingießen in das Bauteil zugänglich. Dies ist vor allem vorteilhaft, wenn die Leitungsdurchführung verstellbare Elemente aufweist, die an ihrem Außenumfang angeordnet sind.

Zur Montage an beispielsweise einem Trapezblech kann ein Ausgleichselement vorgesehen sein, dass mit dem Flanschabschnitt der Montagehalterung verbindbar ist, sodass es sich in Verlängerung des Flanschabschnitts erstreckt und eine Befestigung des Flanschabschnitts in einer größeren Entfernung zur Leitungsdurchführung, beispielsweise an der nächsten Erhebung des Trapezblechs, ermöglicht.

Die Erfindung wird nachfolgend anhand mehrerer Ausführungsbeispiele mit Bezug auf die beigefügten Zeichnungen näher beschrieben. In den Zeichnungen zeigen:
- Figur 1: eine schematische Schnittansicht durch eine erfindungsgemäße Baugruppe aus einer Montagehalterung und einer Leitungsdurchführung;
- Figur 2: die Montagehalterung aus Figur 1 in einer schematischen perspektivischen Darstellung;
- Figur 3: eine schematische perspektivische Darstellung der Baugruppe aus Figur 1;
- Figur 4: eine schematische perspektivische Darstellung der Baugruppe aus Figur 1, teilweise eingegossen in ein Bauteil;
- Figur 5: einen vergrößerten Ausschnitt aus Figur 4;
- Figur 6: eine schematische Schnittansicht einer erfindungsgemäßen Baugruppe mit einer Montagehalterung, einer Leitungsdurchführung und einem Deckel, eingegossen in ein Bauteil;
- Figur 7: eine schematische Schnittansicht einer erfindungsgemäßen Baugruppe mit zwei Montagehalterungen und einer Leitungsdurchführung, eingegossen in ein Bauteil; und
- Figur 8: eine schematische Schnittansicht einer erfindungsgemäßen Baugruppe mit einer Montagehalterung, einer Leitungsdurchführung, einem Deckel und einem Ausgleichselement.

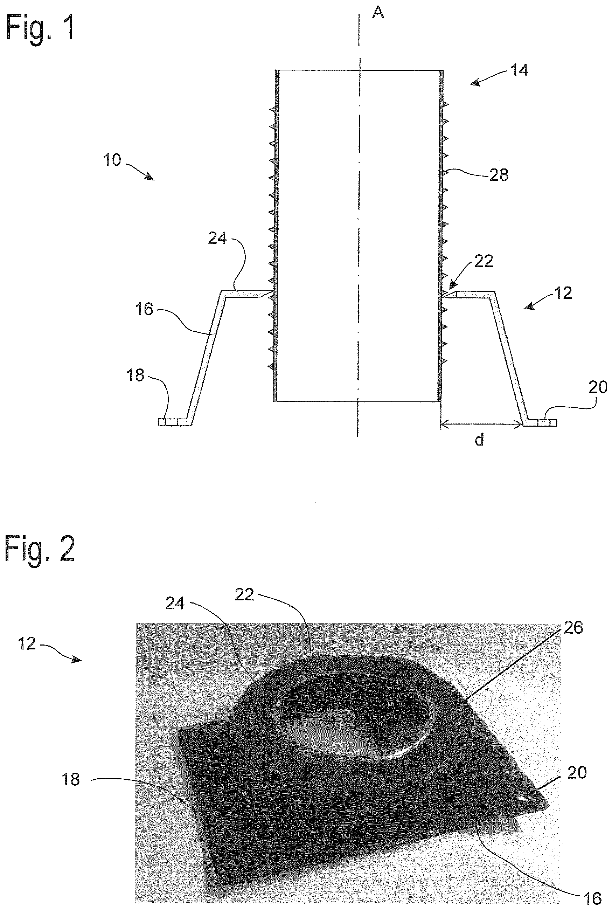

Figur 1 zeigt eine Baugruppe 10 aus einer Montagehalterung 12 und einer darin eingesetzten rohrförmigen Leitungsdurchführung 14.

Wie in Figur 2 gut zu erkennen ist, hat die Montagehalterung 12 eine geschlossen umlaufende Umfangswand 16, die an einem ersten axialen Ende in einen radial nach außen abstehenden Flanschabschnitt 18 übergeht. Der Flanschabschnitt 18 ist in diesem Beispiel viereckig ausgebildet, wobei in jeder der Ecken eine Öffnung 20 vorgesehen ist, über die die Montagehalterung 12 an einer Schalung befestigt werden kann.

Am zweiten, entgegengesetzten axialen Ende der Umfangswand 16 ist eine Einstecköffnung 22 ausgebildet, die hier mittig in einem vom axialen Ende der Umfangswand 16 radial nach innen verlaufenden Deckelabschnitt 24 angeordnet ist.

In den Rand der Einstecköffnung 22 ist eine erste Befestigungsstruktur 26 integriert, die in die Einstecköffnung 22 hineinragt.

Bei der ersten Befestigungsstruktur 26 handelt es sich um ein Gewinde, genauer gesagt, um einen einzigen Gewindegang.

Die Leitungsdurchführung 14 ist ein vorgefertigtes rohrförmiges Bauteil, das in seinem Inneren einen oder mehrere Hohlräume zur Durchführung von Leitungen wie Kabeln oder Rohrleitungen aufweist und das an seinem geschlossenen Außenumfang eine zweite Befestigungsstruktur 28 aufweist. Im gezeigten Beispiel ist die zweite Befestigungsstruktur 28 in Form eines über im Wesentlichen die gesamte Länge der Leitungsdurchführung 14 verlaufenden Gewindes ausgebildet.

Die Leitungsdurchführung 14 kann mittels der Gewinde der Befestigungsstrukturen 26, 28 in die Montagehalterung 12 eingeschraubt werden. Hieraus ergibt sich naturgemäß eine stufenlose Verstellbarkeit in Axialrichtung A, sodass die Leitungsdurchführung 14 in einer beliebigen axialen Position relativ zur Montagehalterung 12 an dieser fixiert werden kann.

Die Umfangswand 16 der Montagehalterung 12 ist in diesem Beispiel konusförmig ausgebildet, wobei der Öffnungswinkel in den Figuren nach unten zum Flanschabschnitt 18 gerichtet ist. Hierdurch und aufgrund des Deckelabschnitts 24 ist ein Abstand d zwischen der Umfangswand 16 und der Außenwand der Leitungsdurchführung 14 hergestellt. Die Außenfläche der Leitungsdurchführung 14 ist daher an ihrem in die Montagehalterung 12 eingesetzten axialen Ende auch nach dem Eingießen in ein Bauteil 30 frei zugänglich.

In diesem Fall weist die Leitungsdurchführung 14 an ihren beiden axialen Enden Funktionselemente 32 auf, die beispielsweise gegenüber der restlichen Leitungsdurchführung 14 verdreht werden können.

Die Leitungsdurchführung 14 ist hier brandhemmend ausgebildet. Die Montagehalterung 12 könnte ebenfalls mit einem Brandschutzmaterial versehen sein, beispielsweise in Form einer Beschichtung.

Um die Leitungsdurchführung 14 in das Bauteil 30, beispielsweise eine Wand oder eine Decke, einzugießen, wird zunächst die Leitungsdurchführung 14 in die Einstecköffnung 22 der Montagehalterung 12 eingeschraubt. Die über die Einstecköffnung 22 hinausstehende Länge der Leitungsdurchführung 14 bestimmt sich beispielsweise aus der Dicke des Bauteils 30.

Die Verbindung zwischen dem Außenumfang der Leitungsdurchführung 14 und dem Rand der Einstecköffnung 22 ist durch den Eingriff der Befestigungsstrukturen 26, 28 weitgehend betondicht. Es ist auch möglich (hier nicht dargestellt), zusätzlich an den Rand der Einstecköffnung 22 eine Dichtung anzubringen, beispielsweise in Form einer angegossenen Filmdichtung.

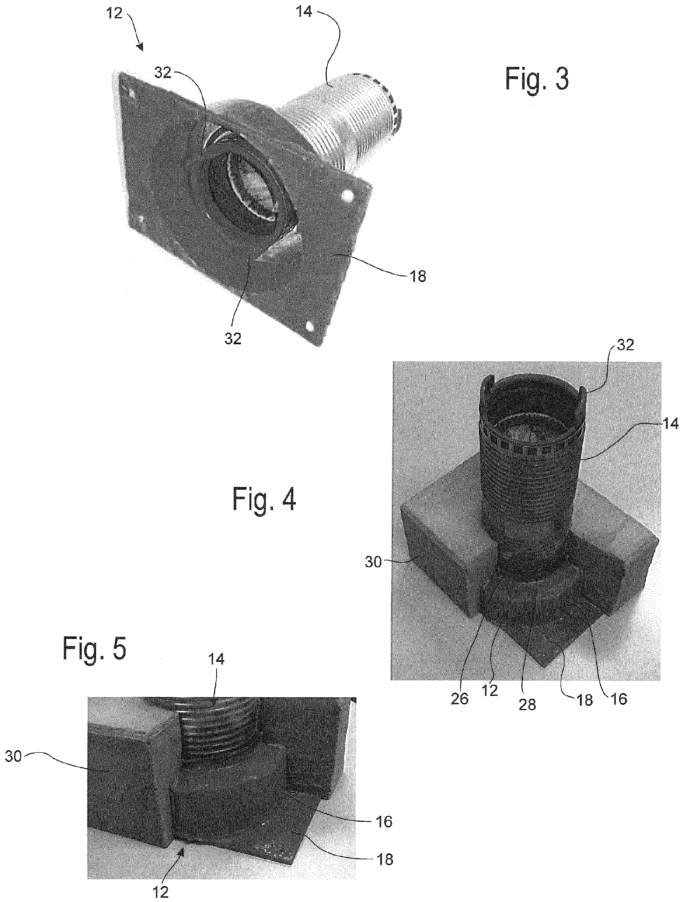

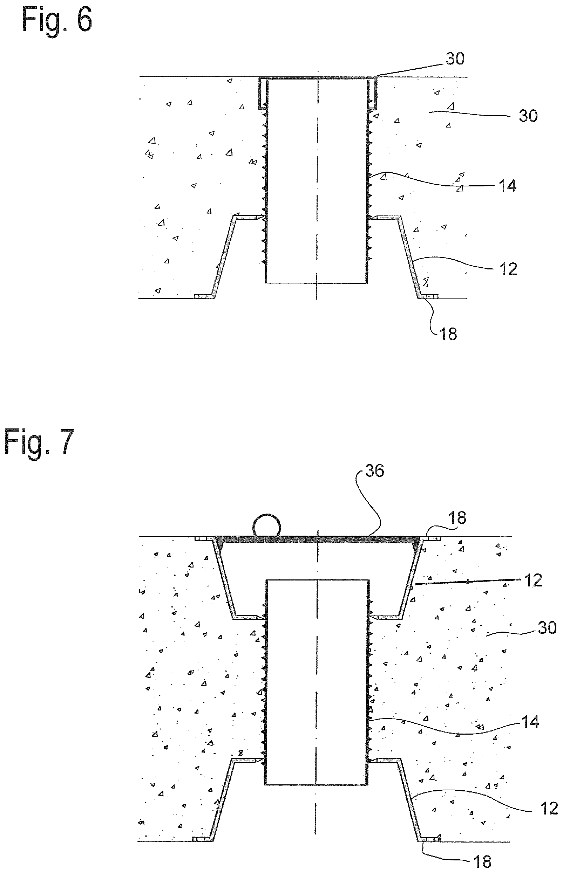

Die Baugruppe aus Leitungsdurchführung 14 und Montagehalterung 12 wird über die Öffnungen 20 im Flanschabschnitt 18 an einer (nicht dargestellten) Schalung befestigt. Anschließend wird das Bauteil 30 gegossen, wobei die Leitungsdurchführung 14 üblicherweise vollständig und die Montagehalterung 12 wenigstens abschnittsweise in das Bauteil 30 eingebettet werden. Dieser Zustand ist in den Figuren 4 und 5 dargestellt. Zur Anpassung an die Dicke des Bauteils 30 wird in einem ersten Fall, der in Figur 6 dargestellt ist, die Leitungsdurchführung 14 so weit in die Montagehalterung 12 eingeschraubt, dass das freie Ende der Leitungsdurchführung 14 bündig mit der späteren Oberfläche des Bauteils 30 abschließt.

Natürlich könnte die Leitungsdurchführung 14 auch über das fertige Bauteil 30 hinausragen, wenn dies gewünscht ist.

In diesem Beispiel wird das freie Ende der Leitungsdurchführung 14 mit einem Deckel 34 verschlossen, etwa einer Kunststoffkappe oder einem Klebeband, der ein Eindringen von Beton beim Gießen des Bauteils 30 verhindert.

Figur 7 zeigt eine zweite Möglichkeit der Montage, insbesondere bei Bauteildicken, die die Länge der Leitungsdurchführung 14 übersteigen.

In diesem Fall ist an jedem axialen Ende der Leitungsdurchführung 14 eine Montagehalterung 12 angeordnet. Mit der in Figur 7 unteren Montagehalterung 12 wird wie beschrieben die Baugruppe 10 an einer Schalung befestigt und so in Bezug auf das zu gießende Bauteil 30 positioniert. Die am in Figur 7 oberen Ende angebrachte Montagehalterung 12 dient als axiale Verlängerung und ist im gezeigten Fall so weit auf das andere axiale Ende der Leitungsdurchführung 14 aufgeschraubt, dass der Flanschabschnitt 18 der oberen Montagehalterung 12 nach dem Gießen bündig mit der Oberseite des Bauteils 30 abschließt.

Um ein Eindringen von Beton in die obere Montagehalterung 12 zu verhindern, ist hier ein Deckel 36 in die Innenöffnung der Montagehalterung 12 innerhalb des Flanschabschnitts 18 eingepasst, der eine Öse zum leichteren Entfernen aufweist.

Diese Konstruktion kann natürlich auch bei dünneren Bauteilen 30 verwendet werden, wenn an beiden Enden der Leitungsdurchführung 14 nach dem Gießen des Bauteils 30 ein radialer Abstand zum Außenumfang der Leitungsdurchführung 14 gewünscht ist, beispielsweise zur Bedienung der Funktionselemente 32.

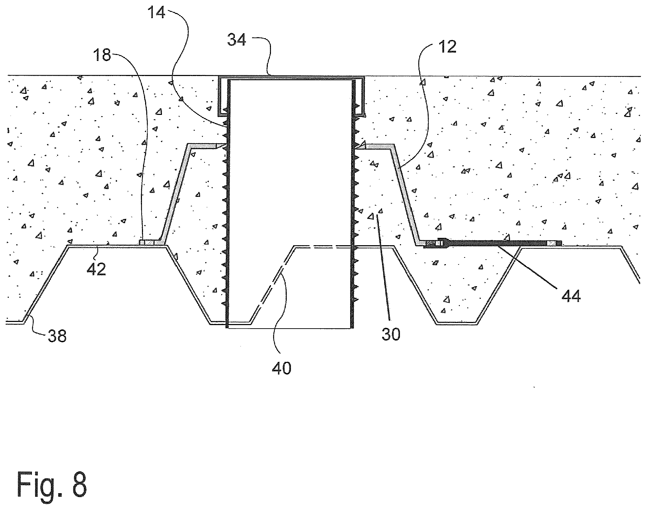

Figur 8 zeigt eine Montage an einem Trapezblech 38. In das Trapezblech 38 ist eine für die Leitungsdurchführung 14 passende Öffnung 40 geschnitten, durch die diese bis zur gewünschten Länge hindurchragt. Die Montagehalterung 12 liegt mit einem Teil des Flanschabschnitts 18 auf einer der Erhebungen 42 des Trapezblechs 38 auf. Im gezeigten Beispiel ist der Abstand der Erhebungen 42 des Trapezblechs 38 so groß, dass das gegenüberliegende Ende des Flanschabschnitts 18 in der Luft hängt, also keine Erhebung 42 trifft. Daher ist hier ein Ausgleichselement 44 vorgesehen, das mit dem Flanschabschnitt 18 verbunden ist und sich in Verlängerung des Flanschabschnitts 18 bis zur nächsten Erhebung 42 des Trapezblechs 38 erstreckt. Auf diese Weise kann die Montagehalterung 12 an zwei gegenüberliegenden Seiten des Flanschabschnitts 18 fest mit dem Trapezblech 38 verbunden werden.

Die Verbindung zwischen dem Ausgleichselement 44 und dem Flanschabschnitt 18 erfolgt hier in Form einer Schnappverbindung, die in eine oder mehrere der Öffnungen 20 im Flanschabschnitt 18 eingreift. Die Befestigung des Ausgleichselements 44 am Flanschabschnitt 18 kann aber natürlich auf jede geeignete Weise erfolgen.

Bei dieser Montageart läuft Beton unter die Montagehalterung 12, was aber kein Problem darstellt, da die Leitungsdurchführung 14 über die Öffnung 40 im Trapezblech 38 abgedichtet ist.

Das in Figur 8 obere Ende der Leitungsdurchführung 14 ist wie in Figur 6 mit einem Deckel 34 verschlossen, um ein Eindringen von Beton zu verhindern.

Das in Figur 8 obere Ende der Leitungsdurchführung 14 ist wie in Figur 6 mit einem Deckel 34 verschlossen, um ein Eindringen von Beton zu verhindern.

In einer zweiten, nicht dargestellten Ausführungsform sind die erste und die zweite Befestigungsstruktur nicht durch ein Gewinde, sondern durch komplementäre Rastelemente gebildet.

In diesem Fall ist es möglich, den Innenrand der Einstecköffnung als Rastkante auszuführen, während am Außenumfang der Leitungsdurchführung in Axialrichtung aufeinanderfolgende Rastelemente, beispielsweise in Form von radial nach außen ragenden Vorsprüngen, ausgebildet sind.

Der Rand der Einstecköffnung und/oder die Außenwand der Leitungsdurchführung sind so nachgiebig ausgebildet, dass ein Verschieben der Leitungsdurchführung relativ zur Montagehalterung mit mäßigem Kraftaufwand möglich ist, um die Leitungsdurchführung in der gewünschten axialen Position in der Einstecköffnung zu verrasten.

In den gezeigten Beispielen ist der Querschnitt der Leitungsdurchführung 14 rund, bei Verwendung einer Rastverbindung für die erste und zweite Befestigungsstruktur 26, 28 kann aber auch ein beliebiger nicht-runder Querschnitt verwendet werden.

## Patentansprüche

1. Baugruppe aus einer Montagehalterung (12) und einer Leitungsdurchführung (14),
wobei die Montagehalterung (12) eine umfangsmäßig geschlossene Umfangswand (16) aufweist, von deren erstem axialen Ende ein Flanschabschnitt (18) zur Befestigung an einer Schalung nach außen absteht und von deren zweitem, entgegengesetzten, axialen Ende eine sich axial durch die Montagehalterung (12) hindurch erstreckende Einstecköffnung (22) für eine Leitungsdurchführung (14) ausgeht,
wobei in die Einstecköffnung (22) eine erste Befestigungsstruktur (26) zum Angriff an einem Außenumfang der Leitungsdurchführung (14) hineinragt.
wobei am Außenumfang der Leitungsdurchführung (14) eine zweite Befestigungsstruktur (28) vorgesehen ist, die in die erste Befestigungsstruktur (26) eingreifen kann, und die erste und die zweite Befestigungsstruktur (26, 28) durch ein Gewinde gebildet sind und so ausgebildet sind, dass sie eine axiale Verstellung der Leitungsdurchführung (14) relativ zur Montagehalterung (12) zulassen, aber eine im Wesentlichen für eine Gussmasse, insbesondere Beton, dichte Verbindung bilden,
**dadurch gekennzeichnet,**
**dass** die erste Befestigungsstruktur (26) durch einen einzigen Gewindegang gebildet ist.

2. Baugruppenach Anspruch 1, **dadurch gekennzeichnet, dass** der Flanschabschnitt (18) Öffnungen (20) aufweist, über die die Montagehalterung (12) an der Schalung befestigt werden kann, und/oder dass an dem zweiten Ende der Umfangswand (16) ein sich nach innen ersteckender Deckelabschnitt (24) angeordnet ist.

3. Baugruppe nach Anspruch 1 oder 2, **dadurch gekennzeichnet, dass** zwischen der Montagehalterung (12) und der Leitungsdurchführung (14) eine Dichtung vorgesehen ist.

4. Baugruppe nach einem der vorhergehenden Ansprüche, **dadurch gekennzeichnet, dass** sich die zweite Befestigungsstruktur (28) im Wesentlichen über die gesamte Länge der Leitungsdurchführung (14) erstreckt.

5. Baugruppe nach einem der vorhergehenden Ansprüche, **dadurch gekennzeichnet, dass** zusätzlich ein Deckel (34) zum Abdichten des axialen Endes der Leitungsdurchführung (14) vorgesehen ist, das nicht in der Montagehalterung (12) aufgenommen ist.

6. Baugruppe nach einem der vorhergehenden Ansprüche, **dadurch gekennzeichnet, dass** beide axialen Enden der Leitungsdurchführung (14) in jeweils einer eigenen Montagehalterung (12) aufgenommen sind.

7. Baugruppe nach Anspruch 6, **dadurch gekennzeichnet, dass** ein Deckel (36) vorgesehen ist, der eine der Montagehalterungen (12) betondicht verschließen kann.

8. Baugruppe nach einem der vorhergehenden Ansprüche, **dadurch gekennzeichnet, dass** eine Innenseite der Umfangswand (16) der Montagevorrichtung (12) von der Außenwand der Leitungsdurchführung (14) beabstandet ist.

9. Baugruppe nach einem der vorhergehenden Ansprüche, **dadurch gekennzeichnet, dass** ein Ausgleichselement (44) vorgesehen ist, das mit dem Flanschabschnitt (18) verbindbar ist, sodass es sich in Verlängerung des Flanschabschnitts (18) erstreckt.

## Claims

1. Assembly consisting of a mounting bracket (12) and a line lead-through (14),
wherein the mounting bracket (12) has a circumferential wall (16) closed around its circumference, from the first axial end of which a flange portion (18) for fastening to a formwork projects towards the outside and from the second opposing axial end of which an insertion opening (22) for a line lead-through (14) departs, said insertion opening extending axially through the mounting bracket (12),
wherein a first fastening structure (26) for engaging an outer circumference of the line lead-through (14) projects into the insertion opening (22) and
wherein a second fastening structure (28) is provided on the outer circumference of the line lead-through (14) and can engage in the first fastening structure (26), the first and second fastening structures (26, 28) each being formed by a thread and being designed in such a manner that they allow for axial adjustment of the line lead-through (14) relative to the mounting bracket (12), but form a connection that is substantially impervious to a casting compound, in particular concrete,
**characterised in that** the first fastening structure (26) is formed by one single thread turn.

2. Assembly according to claim 1, **characterised in that** the flange portion (18) has openings (20) via which the mounting bracket (12) can be fastened to the formwork and/or that an inwardly extending cover portion (24) is arranged at the second end of the circumferential wall (16).

3. Assembly according to claim 1 or claim 2, **characterised in that** a seal is provided between the mounting bracket (12) and the line lead-through (14).

4. Assembly according to one of the preceding claims, **characterised in that** the second fastening structure (28) extends substantially over the entire length of the line lead-through (14).

5. Assembly according to one of the preceding claims, characterised additionally by a cover (34) for sealing the axial end of the line lead-through (14), said cover not being accommodated in the mounting bracket (12).

6. Assembly according to one of the preceding claims, **characterised in that** the two axial ends of the line lead-through (14) are each accommodated in their own mounting brackets (12).

7. Assembly according to claim 6, **characterised by** a cover (36) that can seal one of the mounting brackets (12) so that it is impervious to concrete.

8. Assembly according to one of the preceding claims, **characterised in that** an inner face of the circumferential wall (16) of the mounting device (12) is disposed at a distance from the outer wall of the line lead-through (14).

9. Assembly according to one of the preceding claims, **characterised by** a compensating element (44) that can be connected to the flange portion (18) so as to form an extension of the flange portion (18).

## Revendications

1. Ensemble constitué d'un support de montage (12) et d'un passage de conduite (14), dans lequel le support de montage (12) comporte une paroi circonférentielle (16) fermée sur sa circonférence, ayant une première extrémité axiale à partir de laquelle une partie de bride (18) fait saillie vers l'extérieur en vue d'une fixation sur un coffrage, et ayant une seconde extrémité axiale opposée, une ouverture d'insertion (22) s'étendant axialement à travers le support de montage (12) pour un passage de conduite (14) partant de cette seconde extrémité,
dans lequel une première structure de fixation (26) fait saillie dans l'ouverture d'insertion (22) pour agir sur une circonférence extérieure du passage de conduite (14),
dans lequel une seconde structure de fixation (28) pouvant s'engager dans la première structure de fixation (26) est prévue sur la circonférence extérieure du passage de conduite (14), et les première et seconde structures de fixation (26, 28) sont formées par un filetage et sont conçues de telle sorte qu'elles permettent un réglage axial du passage de conduite (14) par rapport au support de montage (12), mais forment une liaison sensiblement étanche à un composé de coulée, en particulier du béton,
**caractérisé en ce que**
la première structure de fixation (26) est formée par un filet de vis unique.

2. Ensemble selon la revendication 1, **caractérisé en ce que** la partie de bride (18) comporte des ouvertures (20) par l'intermédiaire desquelles le support de montage (12) peut être fixé sur le coffrage, et/ou **en ce qu'**une partie de couvercle (24) s'étendant vers l'intérieur est agencée sur la seconde extrémité de la paroi circonférentielle (16).

3. Ensemble selon la revendication 1 ou 2, **caractérisé en ce qu'**une étanchéité est prévue entre le support de montage (12) et le passage de conduite (14).

4. Ensemble selon l'une des revendications précédentes, **caractérisé en ce que** la seconde structure de fixation (28) s'étend pratiquement sur toute la longueur du passage de conduite (14).

5. Ensemble selon l'une des revendications précédentes, **caractérisé en ce qu'**un couvercle (34) est prévu en plus afin de rendre étanche l'extrémité axiale du passage de conduite (14), lequel couvercle n'est pas reçu dans le support de montage (12).

6. Ensemble selon l'une des revendications précédentes, **caractérisé en ce que** les deux extrémités axiales du passage de conduite (14) sont respectivement reçues dans un support de montage indépendant (12).

7. Ensemble selon la revendication 6, **caractérisé en ce qu'**est prévu un couvercle (36) qui peut obturer l'un des supports de montage (12) de manière étanche au béton.

8. Ensemble selon l'une des revendications précédentes, **caractérisé en ce qu'**un côté intérieur de la paroi circonférentielle (16) du dispositif de montage (12) est espacé de la paroi extérieure du passage de conduite (14).

9. Ensemble selon l'une des revendications précédentes, **caractérisé en ce qu'**est prévu un élément de compensation (44) qui peut être relié à la partie de bride (18) de sorte qu'il s'étend dans le prolongement de la partie de bride (18).
